# EUROPÄISCHE PATENTSCHRIFT

(11) **EP 3 610 170 B1**
(45) Veröffentlichungstag und Bekanntmachung des Hinweises auf die Patenterteilung: **20.01.2021**
(21) Anmeldenummer: 18711034.1
(22) Anmeldetag: 05.03.2018
(51) Int. Cl.: F16D 25/0638, F16D 21/06

(54) **MEHRFACHKUPPLUNGSANORDNUNG, DOPPELKUPPLUNGSGETRIEBEANORDNUNG SOWIE KRAFTFAHRZEUG**
MULTIPLE-CLUTCH ASSEMBLY, DUAL-CLUTCH TRANSMISSION ASSEMBLY AND MOTOR VEHICLE
SYSTÈME D'EMBRAYAGE MULTIPLE, SYSTÈME DE BOÎTE DE VITESSES À DOUBLE EMBRAYAGE ET VÉHICULE À MOTEUR

(30) Priorität: 11.04.2017 DE 102017206218
(43) Veröffentlichungstag der Anmeldung: 19.02.2020
(73) Patentinhaber: ZF Friedrichshafen AG, 88046 Friedrichshafen (DE)
(72) Erfinder: EBERT, Angelika, 97453 Schonungen (DE); MATSCHAS, Steffen, 97708 Bad Bocklet-Aschach (DE); FRIESS, Johannes, 97513 Michelau im Steigerwald (DE)
(74) Vertreter: ZF Friedrichshafen AG
(86) Internationale Anmeldenummer: PCT/EP2018/055250
(87) Internationale Veröffentlichungsnummer: WO 2018/188852

(56) Entgegenhaltungen:
- WO-A1-2015/165458
- DE-A1-102009 059 944
- DE-A1-102012 021 074
- DE-A1-102016 217 210

## Beschreibung

Die Erfindung betrifft eine Kupplungsanordnung zur Anordnung zwischen einer Antriebseinheit und einem Getriebe mit wenigstens einer Lamellenkupplung aufweisend einen Außenlamellenträger und ein Betätigungselement.

Bei bekannten Kupplungsanordnungen befindet sich das Betätigungselement innerhalb des Gehäuses der Kupplungsanordnung. Insbesondere bei Trennkupplungen, Doppelkupplungen und Dreifachkupplungen in Hybridantriebssträngen besteht Bedarf an einem Aufbau, der flexibler für verschiedene Randbedingungen anpassbar ist.

Ausgehend hiervon ist es Aufgabe der vorliegenden Erfindung, eine Kupplungsanordnung anzugeben, bei der ein bauraumoptimierter Aufbau der Kupplungsanordnung möglich ist. Siehe DE 10 2009 059944 als Stand der Technik.

Zur Lösung dieser Aufgabe wird vorgeschlagen, dass das Betätigungselement Öffnungen zur Aufnahme des Außenlamellenträgers aufweist. Ist das Betätigungselement ohne Betätigungslager ausgebildet, wird es üblicherweise Kolben genannt. Befindet sich zwischen dem Druckraum und dem die Kupplung betätigbaren Element ein Lager, so ist die Benennung uneinheitlich. Auch dieser Aufbau und ggf. weitere von einem Kolben abweichende Aufbauten sollen unter den Begriff Betätigungselement fallen.

Dadurch dass das Betätigungselement Öffnungen aufweist, kann der Außenlamellenträger bei der Montage auf den Kolben aufgeschoben werden. Weiterhin kann der Außenlamellenträger, sobald er befestigt ist, als Axialsicherung des Kolbens dienen.

Vorteilhafterweise können die Öffnungen als Langlöcher ausgebildet sein. Insbesondere kann die Längsachse der Langlöcher sich in Axialrichtung der Kupplungsanordnung erstrecken. Diese Ausrichtung erlaubt ein möglichst einfaches Aufschieben und Einführen des Außenlamellenträgers.

Vorteilhafterweise kann der Außenlamellenträger Finger besitzen, die in die Öffnungen eingreifen. Diese weisen also nach radial innen. Der Außenlamellenträger ist somit zwar noch grundsätzlich topfförmig ausgebildet, jedoch weist er am Boden eine sehr große Öffnung auf, in die die Finger hineinweisen. Dadurch wird nicht nur die Montage des Außenlamellenträgers vereinfacht, es kann auch noch ein großer Teil seines Gewichtes eingespart werden. Weiterhin kann durch die Einsparung von Material auch die axiale Baulänge verringert werden.

Vorteilhafterweise kann der Außenlamellenträger auf der Eingangsseite der Lamellenkupplung angeordnet sein. Er ist mit anderen Worten der Eingangslamellenträger der Kupplung.

Vorteilhafterweise kann die Kupplungsanordnung wenigstens zwei Lamellenkupplungen aufweisen und der radial äußere Außenlamellenträger mit dem radial inneren Außenlamellenträger drehfest verbunden sein. Dadurch kann der radial äußere Lamellenträger, insbesondere der die Finger aufweisende Außenlamellenträger, nach radial innen verlängert werden, ohne hierfür eigens Material vorsehen zu müssen. Insbesondere kann der radial äußere Lamellenträger an dem radial inneren Lamellenträger befestigt sein. Beispielsweise kann der radial äußere Lamellenträger stoffschlüssig angebunden, insbesondere verschweißt, sein.

Erfindugnsgemäss muss die Kupplungsanordnung wenigstens drei Lamellenkupplungen aufweisen, wobei die Lamellenkupplungen jeweils ein Außenlamellenträger umfassen und die Außenlamellenträger das Gehäuse der Mehrfachkupplungsanordnung bilden. D. h., dass es keine weiteren Gehäuseteile außer den Außenlamellenträgern gibt, aus dem das Gehäuse besteht. Auch durch diese Ausgestaltung kann axialer Bauraum eingespart werden.

Vorteilhafterweise kann eine der Lamellenkupplungen als Anfahrkupplung ausgebildet sein. Insbesondere kann die Kupplungsanordnung also eine Trennkupplung, eine Anfahrkupplung und eine zweite Lastschaltkupplung aufweisen, wobei die Anfahrkupplung eine der beiden Lastschaltkupplungen des Getriebes ist. Mit der Trennkupplung können u.a. Schleppstarts und Impulsstarts für die Start-Stop-Funktion umgesetzt werden.

Vorzugsweise kann wenigstens eine, insbesondere alle, Lamellenkupplung nasslaufend ausgebildet sein.

Vorteilhafterweise kann die Kupplungsanordnung eine Dreifachkupplungsanordnung sein. Diese kann die Kupplungen wie beschrieben aufweisen.

Daneben betrifft die Erfindung eine Hybrid-Doppelkupplungsgetriebeanordnung mit einer Kupplungsanordnung. Die Hybrid-Doppelkupplungsgetriebeanordnung zeichnet sich dadurch aus, dass die Kupplungsanordnung wie beschrieben ausgebildet ist.

Vorzugsweise weist die Hybrid-Doppelkupplungsgetriebeanordnung einen Elektromotor als zweite Antriebseinheit auf, der achsparallel zu den Getriebeeingangswellen angeordnet ist.

Vorteilhafterweise kann die Doppelkupplungsgetriebeanordnung in Vorgelegebauweise ausgestaltet sein.

Daneben betrifft die Erfindung ein Kraftfahrzeug mit einer Kupplungsanordnung und/oder einer Doppelkupplungsgetriebeanordnung. Das Kraftfahrzeug zeichnet sich dadurch aus, dass die Kupplungsanordnung und/oder die Doppelkupplungsgetriebeanordnung wie beschrieben ausgebildet ist.

Weitere Vorteile, Merkmale und Einzelheiten ergeben sich aus der folgenden Beschreibung von Ausführungsbeispielen und Figuren. Dabei zeigen:
- Figur 1: ein Kraftfahrzeug, und
- Figur 2: eine Kupplungsanordnung.

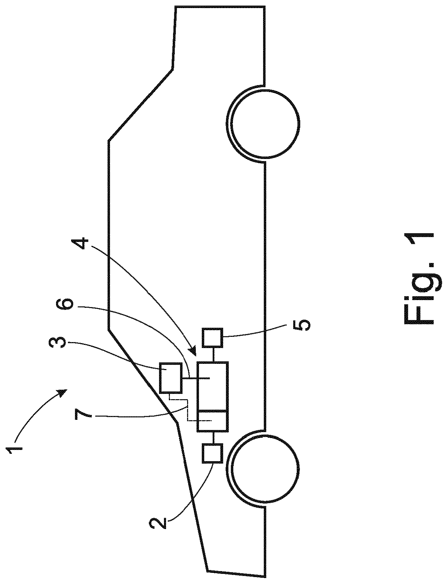

Figur 1 zeigt ein Kraftfahrzeug 1 mit einer ersten Antriebseinheit 2, einer zweiten Antriebseinheit 3, einer Doppelkupplungsgetriebeanordnung 4 und einem Differential 5. Die erste Antriebseinheit umfasst vorzugsweise eine Verbrennungskraftmaschine. Die zweite Antriebseinheit 3, insbesondere in Form eines Elektromotors ausgeschaltet, kann dabei entweder wie durch die Linie 6 oder die gestrichelt dargestellte Linie 7 angedeutet am Antriebsstrang angreifen. Ein Zusammenwirken mit einer oder beiden Getriebeeingangswellen wird dabei als P2-Anordnung bezeichnet und ein Zusammenwirken mit dem Getriebe selbst als P3-Anordnung. Daneben sind auch eine P1-und eine P4- Anordnung bekannt. Diese stellen die grundsätzlichen Varianten einer parallelen Anordnung von erster Antriebseinheit 2 und zweiter Antriebseinheit 3 dar. Im Folgenden wird eine Kupplungsanordnung für eine P2-Anordnung beschrieben.

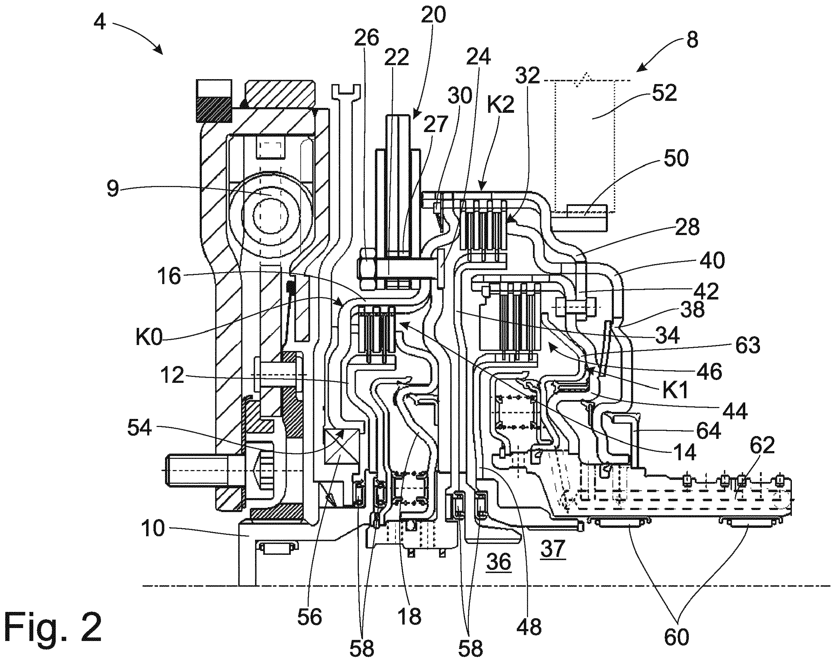

Figur 2 zeigt eine Kupplungsanordnung 8 als Teil der Doppelkupplungsgetriebeanordnung 4. Die Doppelkupplungsgetriebeanordnung 4 ist hybridisiert, weswegen Drehmoment über zwei Wege zum Getriebe gelangen kann. Der erste Weg führt von der ersten Antriebseinheit 2 über einen Torsionsdämpfer zur Dämpfung von Torsionsschwingungen, insbesondere ein Zweimassenschwungrad 9, und eine Nabe 10 zur Trennkupplung K0. Mit der Nabe 10 ist dabei der Eingangslamellenträger der Trennkupplung K0, nämlich der Innenlamellenträger 12, drehfest verbunden. Über das Lamellenpaket 14 kann das Drehmoment auf den Außenlamellenträger 16 übertragen werden. Zur Betätigung der Trennkupplung K0 ist ein Kolben 18 vorhanden.

Ausgangsseitig der Trennkupplung K0, nämlich am Ausgangslamellenträger, in diesem Fall dem Außenlamellenträger 16, ist ein drehzahladaptiver Tilger 20 befestigt. Der drehzahladaptiver Tilger 20 ist mit dem Außenlamellenträger 16 lösbar verbunden. Beispielsweise kann der Tilger 20 mit dem Außenlamellenträger 16 mittels einer Schraube 22 verschraubt sein. Dabei befindet sich der Schraubenkopf 24 innerhalb der Kupplungsanordnung 8, während die Mutter 26 außerhalb angeordnet ist. Zwischen Tilger 20 und Schraube 26 befindet sich noch eine Hülse 27.
Diese dient bei geschlossenem Schraubverband der axialen Beabstandung der Bahnbleche des Tilgers 20.

Mit dem Außenlamellenträger 16 ist der Außenlamellenträger 28 drehfest verbunden. Beispielsweise können der Außenlamellenträger 16 und der Außenlamellenträger 28 formschlüssig verbunden sein. Zur axialen Sicherung des Außenlamellenträgers 16 gegenüber dem Außenlamellenträger 18 kann ein Sprengring 30 verwendet werden. Der Außenlamellenträger 28 ist dabei der Eingangslamellenträger der Kupplung K2, die als Lamellenkupplung ausgebildet ist und eine der beiden Lastschaltkupplungen der Doppelkupplungsgetriebeanordnung 4 darstellt. Ist die Trennkupplung K0 geschlossen, wird das Drehmoment über den Außenlamellenträger 16, den Außenlamellenträger 28 und das Lamellenpaket 32 der Kupplung K2 zum Innenlamellenträger 34 und von dort zur radial inneren Getriebeeingangswelle 36 übertragen.

Zum Verbinden der Außenlamellenträger 16 und 28 kann der Tilger 20 vom Außenlamellenträger 16 abmontiert werden, wodurch die Übergangsstelle freiliegt.

Zum Betätigen weist die Kupplung K2 den Kolben 38 auf. Der Kolben 38 hat in Umfangsrichtung verteilt mehrere Öffnungen 40 in Form von Langlöchern, in die der Außenlamellenträger 28 eingreifen kann. Genauer gesagt greifen mehrere Finger 42 des Außenlamellenträgers 28 in die Öffnungen 40 des Kolbens 38 ein. So bleibt der Kolben 38 gegenüber dem Außenlamellenträger 28 axial verschiebbar.

Radial innerhalb der Kupplung K2 befindet sich die Kupplung K1, die als Anfahrkupplung ausgestaltet ist. Der Außenlamellenträger 28 ist mit dem Außenlamellenträger 44 der Kupplung K1 drehfest verbunden. Insbesondere können die Außenlamellenträger 28 und 44 verschweißt sein. So kann das Drehmoment, das von der ersten Antriebseinheit 2 übertragen wird, auch zur Kupplung K1 gelangen. Der Außenlamellenträger 44 ist dementsprechend der Eingangslamellenträger der Kupplung K1. Über das Lamellenpaket 46 kann das Drehmoment zur radial äußeren Getriebeeingangswelle 37 gelangen.

Die Öffnungen 40 zur Aufnahme der Finger 42 sind bevorzugt am radial äußeren Rand, auch als Topfrand bezeichenbar, des Kolbens 38 angeordnet. Der Kolben 38 hat eine Topfform. Am äußeren Rand des Bodens können die Finger 42 des Außenlamellenträgers 28 eingeführt werden, weswegen sich dort bevorzugt die Öffnungen 40 befinden.

Am Außenlamellenträger 28 kann ein Kettenrad 50 befestigt sein. Das Kettenrad 50 kann beispielsweise am Außenlamellenträger 28 angeschweißt sein. Dieses steht im Eingriff mit einer Kette 52, die den Elektromotor 3 und die Kupplungsanordnung 8 verbindet. Der Elektromotor 3 greift dabei auf der Eingangsseite beider Kupplungen K1 und K2 an, da der Ausganglamellenträger 28 einerseits der Eingangslamellenträger der Kupplung K2 ist und andererseits mit dem Außenlamellenträger 44 der Kupplung K1 drehfest verbunden ist, wobei der Außenlamellenträger 44 der Kupplung K1 ebenfalls der Eingangslamellenträger ist. Dementsprechend zeigt Figur 2 eine P2-Anordnung in Bezug auf die Ankupplung des Elektromotors 3.

Durch die Ausgestaltung und die Verbindung der Außenlamellenträger 16, 28 und 44 bilden diese das Gehäuse der Kupplungsanordnung 8. Die Kupplungsanordnung 8 ist eine Mehrfachkupplungsanordnung, und insbesondere eine Dreifachkupplungsanordnung. Außer den Außenlamellenträgern 16, 28 und 44 gibt es keine weiteren Gehäuseteile. Hierdurch ergibt sich ein bauraumoptimierter Aufbau.

Da der Tilger 20 lösbar mit dem Außenlamellenträger 16 verbunden ist kann die Verbindung der Außenlamellenträger 16 und 28 erfolgen, bevor der Tilger 20 mit der Kupplungsanordnung 8 verbunden wird.

Der beschriebene Aufbau mit den Außenlamellenträgern als Gehäuse erlaubt auch eine vereinfachte Lagerung der Kupplungsanordnung 8. Insbesondere kann die Kupplungsanordnung 8 motorseitig eine einzige radiale Lagerstelle 54 aufweisen. Das Lager 56 kann dabei als Radialkugellager ausgebildet sein. Es kann dabei bevorzugt ein Axial- und Radiallager sein. Es jedoch motorseitig das einzige Lager mit einer radialen Lagerfunktion.

Weiterhin weist die Kupplungsanordnung 8 motorseitig und getriebeseitig jeweils zwei Axiallager 58 auf. Die Axiallager 58 dienen der axialen Lagerung der Innenlamellenträger 12, 34 und 48. Sie sind dementsprechend an den Füßen der Innenlamellenträger 12, 34 und 48 angeordnet. Auf der Getriebeseite weist die Kupplungsanordnung 8 zur radialen Lagerung zwei Nadellager 60 auf, die die Nabe 62 lagern. Die Nabe 62 ist als Ölzuführnabe ausgebildet. Sie umfasst dementsprechend Ölkanäle und Dichtungen. Die Nabe 62 ist drehfest mit dem Außenlamellenträger 44 verbunden. Jedoch erfolgt der Drehmomentfluss nicht wie bei bekannten Doppelkupplungsanordnungen über die Nabe auf die Außenlamellenträger, vielmehr kommt das Drehmoment von den Außenlamellenträger, genauer gesagt vom Außenlamellenträger 28 über den Außenlamellenträger 44 zur Nabe 62.

Der Kolben 63 der Kupplung K1 stützt sich ebenfalls auf der Nabe 62 ab. Auch der Dichtungsträger 64 zum Abdichten des Druckraums der Kupplung K2 ist an der Nabe 62 angeordnet.

### Bezugszeichen

- 1: Kraftfahrzeug
- 2: erste Antriebseinheit
- 3: zweite Antriebseinheit
- 4: Doppelkupplungsgetriebeanordnung
- 5: Differential
- 6: Linie
- 7: Linie
- 8: Kupplungsanordnung
- 9: Torsionsdämpfer
- 10: Nabe
- 12: Innenlamellenträger
- 14: Lamellenpaket
- 16: Außenlamellenträger
- 18: Kolben
- 20: drehzahladaptiver Tilger
- 22: Schraube
- 24: Schraubenkopf
- 26: Mutter
- 27: Hülse
- 28: Außenlamellenträger
- 30: Sprengring
- 32: Lamellenpaket
- 34: Innenlamellenträger
- 36: Getriebeeingangswelle
- 37: Getriebeeingangswelle
- 38: Kolben
- 40: Öffnung
- 42: Finger
- 44: Außenlamellenträger
- 46: Lamellenpaket
- 48: Innenlamellenträger
- 50: Kettenrad
- 52: Kette
- 54: Lagerstelle
- 56: Lager
- 58: Axiallager
- 60: Nadellager
- 62: Nabe
- 63: Kolben
- 64: Dichtungsträger

- K0: Trennkupplung
- K1: Kupplung
- K2: Kupplung

## Patentansprüche

1. Kupplungsanordnung (8) zur Anordnung zwischen einer Antriebseinheit (2) und einem Getriebe (4) mit wenigstens einer Lamellenkupplung (K2) aufweisend einen Außenlamellenträger (28) und ein Betätigungselement (38), wobei das Betätigungselement (38), insbesondere ein Kolben, Öffnungen (40) zur Aufnahme des Außenlamellenträgers (28) aufweist, und **dadurch gekennzeichnet, dass** die Kupplungsanordnung (8) wenigstens drei Lamellenkupplungen (K0, K1, K2) aufweist, wobei die Lamellenkupplungen (K0, K1, K2) jeweils einen Außenlamellenträger (16, 28, 44) umfassen und die Außenlamellenträger (16, 28, 44) das Gehäuse der Kupplungsanordnung (8) bilden.

2. Kupplungsanordnung nach Anspruch 1, **dadurch gekennzeichnet, dass** die Öffnungen (40) als Langlöcher ausgebildet sind.

3. Kupplungsanordnung nach Anspruch 1 oder 2, **dadurch gekennzeichnet, dass** der Außenlamellenträger (28) Finger (42) besitzt, die in die Öffnungen (40) eingreifen.

4. Kupplungsanordnung nach Anspruch 3, **dadurch gekennzeichnet, dass** sich die Finger (42) nach radial innen erstrecken.

5. Kupplungsanordnung nach einem der vorangehenden Ansprüche, **dadurch gekennzeichnet, dass** der Außenlamellenträger (28) auf der Eingangsseite der Lamellenkupplung (K2) angeordnet ist.

6. Kupplungsanordnung nach einem der vorangehenden Ansprüche, **dadurch gekennzeichnet, dass** die Kupplungsanordnung (8) wenigstens zwei Lamellenkupplungen (K1, K2) aufweist und der radial äußere Außenlamellenträger (28) mit dem radial inneren Außenlamellenträger (44) drehfest verbunden ist.

7. Kupplungsanordnung nach Anspruch 6, **dadurch gekennzeichnet, dass** der radial äußere Lamellenträger (28) in die Öffnungen (40) eingreift.

8. Kupplungsanordnung nach einem der Ansprüche 5 oder 6, **dadurch gekennzeichnet, dass** der radial äußere Lamellenträger (28) an dem radial inneren Lamellenträger (44) befestigt ist.

9. Kupplungsanordnung nach einem der vorangehenden Ansprüche, **dadurch gekennzeichnet, dass** eine der Lamellenkupplungen (K1) als Anfahrkupplung ausgebildet ist.

10. Kupplungsanordnung nach einem der vorangehenden Ansprüche, **dadurch gekennzeichnet, dass** eine der Lamellenkupplungen (K0) als Trennkupplung ausgebildet ist.

11. Kupplungsanordnung nach einem der vorangehenden Ansprüche, **dadurch gekennzeichnet, dass** die Kupplungsanordnung (8) eine Dreifachkupplungsanordnung ist.

12. Hybrid-Doppelkupplungsgetriebeanordnung (4) mit einer Kupplungsanordnung (8), **dadurch gekennzeichnet, dass** die Kupplungsanordnung (8) nach einem der vorangehenden Ansprüche ausgebildet ist.

13. Kraftfahrzeug (1) mit einer Kupplungsanordnung (8) und/oder einer Doppelkupplungsgetriebeanordnung (4), **dadurch gekennzeichnet, dass** die Kupplungsanordnung (8) nach einem der Ansprüche 1 bis 11 und/oder die Doppelkupplungsgetriebeanordnung (4) nach Anspruch 12 ausgebildet ist.

## Claims

1. Clutch arrangement (8) for arranging between a drive unit (2) and a transmission (4) with at least one multiple disc clutch (K2) having an outer multiple disc carrier (28) and an actuating element (38), the actuating element (38), in particular a piston, having openings (40) for receiving the outer multiple disc carrier (28), and **characterized in that** the clutch arrangement (8) has at least three multiple disc clutches (K0, K1, K2), the multiple disc clutches (K0, K1, K2) in each case comprising an outer multiple disc carrier (16, 28, 44), and the outer multiple disc carriers (16, 28, 44) forming the housing of the clutch arrangement (8).

2. Clutch arrangement according to Claim 1, **characterized in that** the openings (40) are configured as slots.

3. Clutch arrangement according to Claim 1 or 2, **characterized in that** the outer multiple disc carrier (28) has fingers (42) which engage into the openings (40) .

4. Clutch arrangement according to Claim 3, **characterized in that** the fingers (42) extend radially inwards.

5. Clutch arrangement according to one of the preceding claims, **characterized in that** the outer multiple disc carrier (28) is arranged on the input side of the multiple disc clutch (K2).

6. Clutch arrangement according to one of the preceding claims, **characterized in that** the clutch arrangement (8) has at least two multiple disc clutches (Kl, K2), and the radially outer outer multiple disc carrier (28) is connected fixedly to the radially inner outer multiple disc carrier (44) so as to rotate with it.

7. Clutch arrangement according to Claim 6, **characterized in that** the radially outer multiple disc carrier (28) engages into the openings (40).

8. Clutch arrangement according to either of Claims 5 and 6, **characterized in that** the radially outer multiple disc carrier (28) is fastened to the radially inner multiple disc carrier (44).

9. Clutch arrangement according to one of the preceding claims, **characterized in that** one of the multiple disc clutches (K1) is configured as a start-up clutch.

10. Clutch arrangement according to one of the preceding claims, **characterized in that** one of the multiple disc clutches (K0) is configured as a separating clutch.

11. Clutch arrangement according to one of the preceding claims, **characterized in that** the clutch arrangement (8) is a triple clutch arrangement.

12. Hybrid double clutch transmission arrangement (4) with a clutch arrangement (8), **characterized in that** the clutch arrangement (8) is configured according to one of the preceding claims.

13. Motor vehicle (1) with a clutch arrangement (8) and/or a double clutch transmission arrangement (4), **characterized in that** the clutch arrangement (8) is configured according to one of Claims 1 to 11 and/or the double clutch transmission arrangement (4) is configured according to Claim 12.

## Revendications

1. Système d'embrayage (8) prévu pour être disposé entre une unité d'entraînement (2) et une transmission (4) comprenant au moins un embrayage à disques (K2) présentant un support de disques extérieurs (28) et un élément d'actionnement (38), l'élément d'actionnement (38), en particulier un piston, présentant des ouvertures (40) pour recevoir le support de disques extérieurs (28), et **caractérisé en ce que** le système d'embrayage (8) présente au moins trois embrayages à disques (K0, K1, K2), les embrayages à disques (K0, K1, K2) comprenant chacun un support de disques extérieurs (16, 28, 44) et les supports de disques extérieurs (16, 28, 44) formant le boîtier du système d'embrayage (8).

2. Système d'embrayage selon la revendication 1, **caractérisé en ce que** les ouvertures (40) sont réalisées sous forme de trous oblongs.

3. Système d'embrayage selon la revendication 1 ou 2, **caractérisé en ce que** le support de disques extérieurs (28) possède des doigts (42) qui s'engagent dans les ouvertures (40).

4. Système d'embrayage selon la revendication 3, **caractérisé en ce que** les doigts (42) s'étendent radialement vers l'intérieur.

5. Système d'embrayage selon l'une quelconque des revendications précédentes, **caractérisé en ce que** le support de disques extérieurs (28) est disposé sur le côté d'entrée de l'embrayage à disques (K2) .

6. Système d'embrayage selon l'une quelconque des revendications précédentes, **caractérisé en ce que** le système d'embrayage (8) présente au moins deux embrayages à disques (K1, K2) et le support de disques extérieurs radialement extérieur (28) est connecté de manière solidaire en rotation au support de disques extérieurs radialement intérieur (44).

7. Système d'embrayage selon la revendication 6, **caractérisé en ce que** le support de disques radialement extérieur (28) s'engage dans les ouvertures (40) .

8. Système d'embrayage selon l'une quelconque des revendications 5 et 6, **caractérisé en ce que** le support de disques radialement extérieur (28) est fixé au support de disques radialement intérieur (44) .

9. Système d'embrayage selon l'une quelconque des revendications précédentes, **caractérisé en ce que** l'un des embrayages à disques (K1) est réalisé sous forme d'embrayage de démarrage.

10. Système d'embrayage selon l'une quelconque des revendications précédentes, **caractérisé en ce que** l'un des embrayages à disques (K0) est réalisé sous forme d'embrayage de séparation.

11. Système d'embrayage selon l'une quelconque des revendications précédentes, **caractérisé en ce que** le système d'embrayage (8) est un système d'embrayage triple.

12. Système de transmission hybride à double embrayage (4) comprenant un système d'embrayage (8), **caractérisé en ce que** le système d'embrayage (8) est réalisé selon l'une quelconque des revendications précédentes.

13. Véhicule automobile (1) comprenant un système d'embrayage (8) et/ou un système de transmission à double embrayage (4), **caractérisé en ce que** le système d'embrayage (8) est réalisé selon l'une quelconque des revendications 1 à 11 et/ou le système de transmission à double embrayage (4) est réalisé selon la revendication 12.
